# FASCICULE DE BREVET EUROPEEN

(11) **EP 0 555 151 B1**
(45) Date de publication et mention de la délivrance du brevet: **22.10.1997**
(21) Numéro de dépôt: 93400285.8
(22) Date de dépôt: 04.02.1993
(51) Int. Cl.: H02K 29/00, H02K 29/06, H02K 29/08, H02K 29/10

(54) **Moteur à courant continu à commutateur électronique**
Gleichstrommotor mit elektronischem Kommutator
D.C. Motor with electronic commutator

(30) Priorité: 06.02.1992 FR 9201352
(43) Date de publication de la demande: 11.08.1993
(73) Titulaire: INTERTECHNIQUE, F-78370 Plaisir (FR)
(72) Inventeur: Cocoynacq,Gérard, F-78800 Houilles (FR)
(74) Mandataire: Fort, Jacques

(56) Documents cités:
- EP-A- 0 076 519
- WO-A-87/02527
- WO-A-91/04602
- DE-A- 3 914 082
- FR-A- 2 441 289
- US-A- 3 131 341
- US-A- 4 532 460

## Description

L'invention concerne les moteurs à courant continu à collecteur dont le champ magnétique statorique est créé par des aimants. Elle trouve une application particulièrement importante dans le domaine des moteurs d'entraînement de pompes noyées dans un liquide électriquement isolant.

On utilise largement les moteurs électriques à courant continu pour entraîner des pompes noyées de mise en circulation ou de transvasement de liquide. Ces moteurs ont en effet de nombreux avantages. Ils peuvent avoir une dimension et un poids plus faibles. En contrepartie, le dispositif traditionnel de commutation par collecteur à lames et balais nécessaire pour distribuer le courant dans les bobinages du rotor et créer le champ tournant est à l'origine de la plupart des pannes. Lorsqu'en particulier le moteur est noyé, la présence de liquide provoque une usure rapide du collecteur et des balais par suite de phénomènes d'électro-érosion, d'aquaplanage et souvent aussi de pollution.

On déjà tenté d'écarter les défauts ci-dessus des moteurs alimentés en courant continu en réalisant des moteurs dits "sans balai" ou "à commutation électronique".

Ces moteurs sans balai ne peuvent pas être regardés comme fonctionnant effectivement en courant continu et ils ne conservent pas les avantages des moteurs à collecteur.

On connaît également (US-A-3 131 341) un moteur à courant continu ayant des transistors de commutation portés par le rotor ; mais ces transistors sont commandés par le courant passant du stator au rotor par un collecteur classique.

Le document WO-A-8 702527 décrit un dispositif de commande automatique d'un moteur à courant continu. Dans un mode de réalisation, il comporte un collecteur transmettant les signaux provenant d'un générateur de commande à une unité de commande appartenant au rotor. L'unité de commande est prévue pour alimenter trois enroulements de façon telle que l'un soit alimenté sous une polarité, un autre soit alimenté sous la polarité inverse et le troisième ne soit pas alimenté. une telle disposition, dont rien dans le document ne suggère de s'écarter, conduit à une dissymétrie d'alimentation préjudiciable au fonctionnement à divers titres et à une réduction de couple lors du démarrage.

Le document indique qu'il est possible d'utiliser une information de commande temporelle de l'alimentation à l'aide de capteurs sans contact (capteurs à effet Hall), mais sans indiquer comment et en quel nombre ces capteurs peuvent être employés.

L'invention vise à fournir un moteur à courant continu conservant l'ensemble des caractéristiques favorables des moteurs traditionnels améliorant le rendement et faisant disparaître les inconvénients liés à la présence d'un dispositif de commutation à collecteur à lames.

Dans ce but l'invention propose un moteur électrique à courant continu.

Les éléments statiques seront en général constitués par des transistors, associés à des composants passifs permettant d'atténuer les transitoires de commutation, tels qu'inductance et condensateur. Les progrès effectués par l'électronique et les circuits hybrides permettent de regrouper la totalité des éléments de commutation reliés à une même bague sous forme d'un circuit de faible volume, pouvant être totalement enrobé.

Le capteur sans contact de position angulaire peut avoir l'une quelconque des différentes natures couramment utilisées dans les moteurs dits "sans balai". Chaque capteur peut notamment être une sonde de Hall, une sonde magnéto-résistive, un capteur photo-électrique associé à une photo-diode placée sur le stator, etc. Ces capteurs n'exigent pas de transfert d'énergie électrique par des contacts.

Dans la pratique, une régularité de fonctionnement satisfaisante pour la plupart des applications et une possibilité de démarrage à couple élevé dans toutes les orientations initiales peut être obtenues dès que le nombre 2n de bobines est de 10. Les matériaux d'enrobage et les matériaux constitutifs du moteur sont choisis en fonction du liquide dans lequel le moteur est plongé. Ce liquide peut notamment être du carburant, de l'huile, une fraction pétrolière ou un produit chimique.

L'invention sera mieux comprise à la lecture de la description qui suit d'un mode particulier de réalisation, donné à titre d'exemple non limitatif. La description se réfère aux dessins qui l'accompagnent, dans lesquels :
- la figure 1 est une vue en coupe longitudinale schématique d'un moteur suivant un mode particulier de réalisation ;
- la figure 2 est un schéma de principe montrant l'association des éléments de commutation avec les dix bobines d'un moteur, suivant un mode particulier de réalisation ;
- la figure 3 est un schéma montrant une réalisation effective possible de deux éléments de commutation associés à des bobines ; et
- la figure 4, similaire à une portion de la figure 1, montre une variante de réalisation.

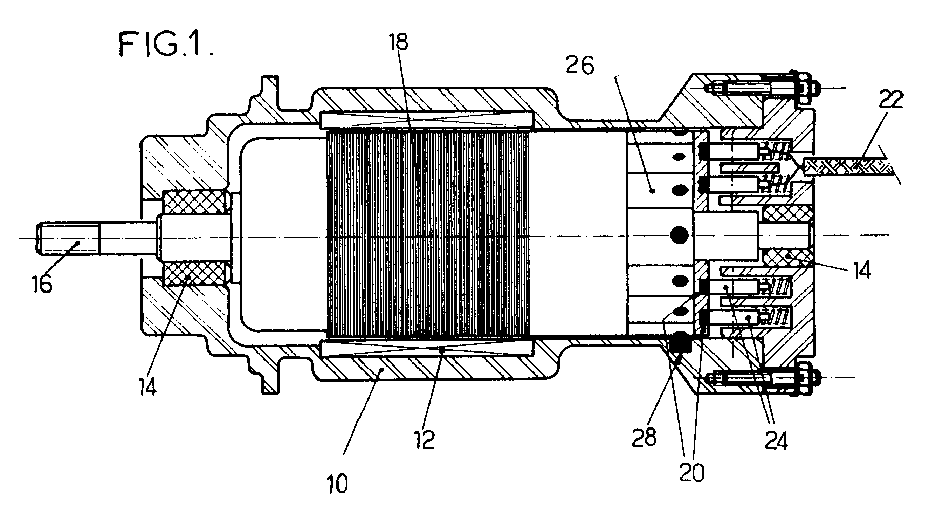

Le moteur à courant continu montré en figure 1 a une constitution générale classique. Il comporte un stator ayant une carcasse 10 portant des aimants 12 de création d'un champ magnétique. Des paliers 14 fixés au stator portent l'arbre 16 du rotor du moteur, destiné à être accouplé à un organe entraîné, tel qu'une pompe. Sur l'arbre est calé un noyau magnétique 18 ayant des encoches de réception de bobines, non représentées.

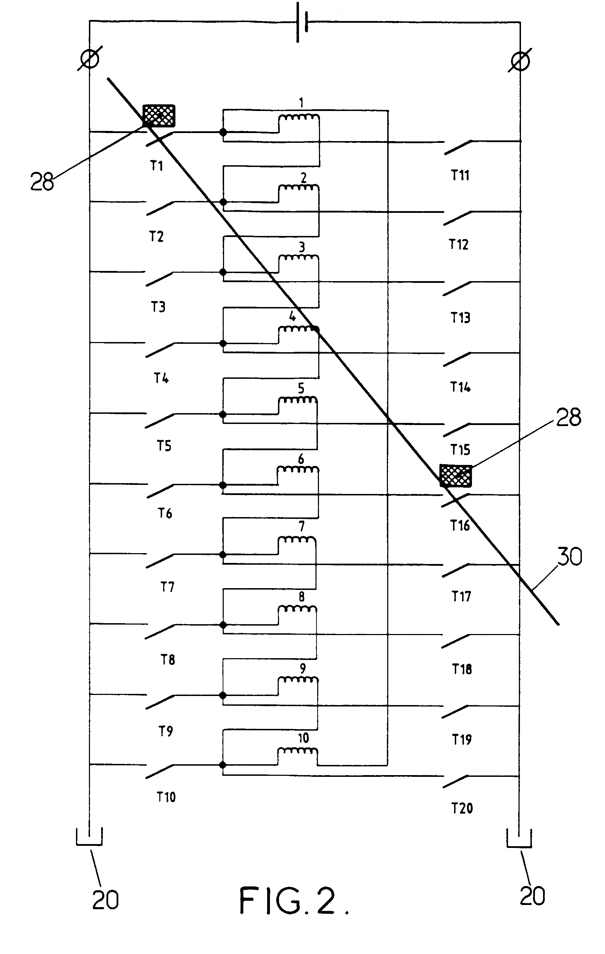

La constitution décrite jusqu'ici est classique. Conformément à l'invention, le moteur ne comporte pas de dispositif de commutation à collecteur à lames et balais, mais de simples bagues lisses 20 de contact électrique glissant, recevant le courant provenant d'une alimentation 22 par des balais respectifs 24. Entre les bagues 20 et les bobines du collecteur sont interposés des éléments de commutation, constituant,dans le cas de la figure 1, un ensemble que l'on peut qualifier de collecteur électronique 26. Ce collecteur peut avoir la disposition de principe montrée en figure 2 et être associé à un indicateur 28 de position angulaire du rotor. Sur la figure 2, les dix bobines sont numérotées de 1 à 10. L'entrée de chacune d'elles est munie de deux éléments de commutation. Les éléments de commutation d'une bobine d'ordre n sont désignés par les références Tn et T(10+n). Pour la bobine d'ordre n, l'élément de commutation Tn relie la borne d'entrée de la bobine à l'une des polarités d'alimentation. L'élément de commutation T(10+n) permet de relier l'entrée de la même bobine à l'autre polarité. La seconde borne de chaque bobine est reliée à la première borne de la bobine suivante pour placer les bobines en série et constituer une boucle.

Le collecteur électronique 26 est prévu de façon à fermer simultanément un couple de deux éléments de commutation Tₙ et T(10+n+5) de façon à faire passer un courant dans un sens déterminé dans les bobines n à n+4, un courant de sens opposé dans les bobines n à (n+9).

L'indicateur 28 peut être prévu pour commander deux éléments de commutation du collecteur électronique à la fois, comme indiqué par la ligne 30 sur la figure 2.

Les circuits de commande peuvent avoir diverses constitutions, permettant soit d'utiliser un seul capteur de position coopérant avec l'indicateur 28, soit un capteur pour chacun des deux groupes d'éléments de commutation montrés en figure 2, soit autant de capteurs qu'il y a d'éléments de commutation.

Une solution avantageuse dans beaucoup de cas consiste à placer sur le stator un seul indicateur 28 et à munir chaque bobine d'un capteur constitué par exemple par une sonde de Hall.

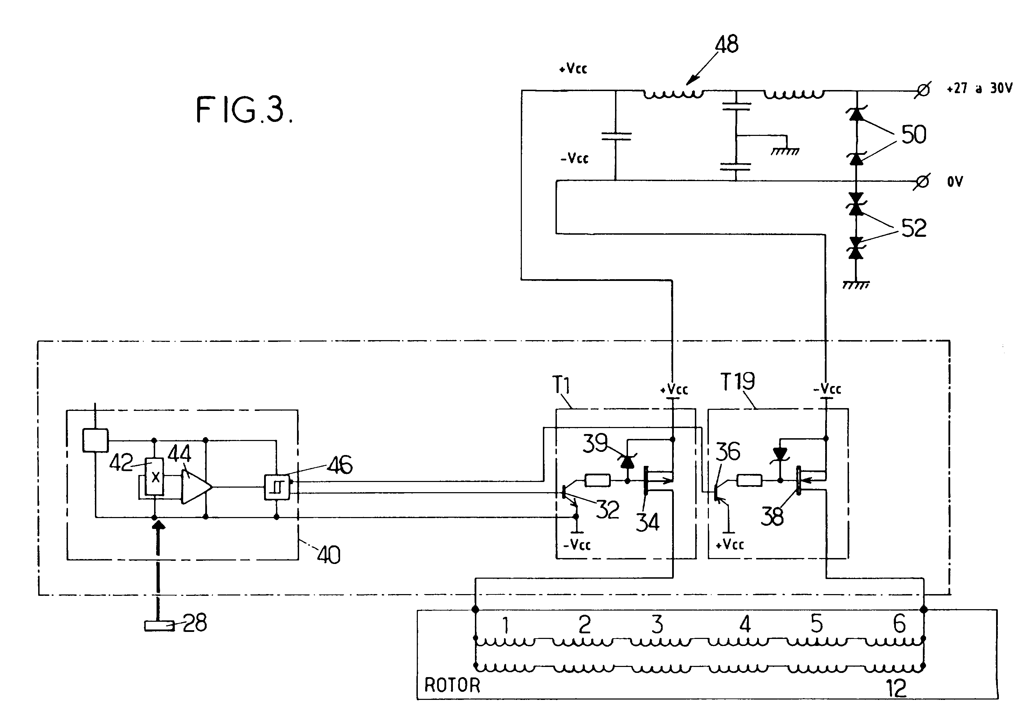

La figure 3 correspond à ce dernier cas et à celui d'un rotor à douze bobines 1, ..., 12 et elle montre uniquement les éléments de commutation T₁ et T₁₉, en reprenant les conventions de numérotation ci-dessus.

L'élément de commutation T₁, comme d'ailleurs les éléments T₂ à T₁₂, comporte un transistor bipolaire NPN d'entrée 32 suivi d'un transistor MOS de puissance 34 à canal P permettant de relier la tension +Vcc à l'entrée de la bobine 1. L'élément T₁₉ est constitué, de façon complémentaire, d'un transistor bipolaire 36 de type PNP, suivi d'un transistor MOS à canal N 38, destiné à relier la tension -Vcc à la sortie de la bobine 6 et à l'entrée de la bobine 7. Des diodes Zener 39 relient la porte des transistors MOS aux alimentations respectives +Vcc et -Vcc pour éliminer les surtensions.

Les transistors 32 et 36 sont simultanément commandés par un circuit d'attaque 40 contenant un capteur 42 affecté au couple d'éléments de communication T₁ et T₁₉, un amplificateur 44 et un circuit à seuils 46 dont l'étalonnage détermine la plage angulaire du rotor pendant laquelle les transistors 32 et 36 sont conducteurs et donc les bobines sont alimentées.

Pour une utilisation en aéronautique, les tensions +Vcc et -Vcc seront généralement de + 27 Volts et de 0 Volt. Elles sont obtenues en général à partir de l'alimentation de bord par l'intermédiaire d'une cellule de filtrage 48 de type LC.

L'alimentation comporte avantageusement un limiteur de surtension absorbant les transistors de commutation, pouvant être constitué par une ou plusieurs diodes Zener 50 montées en série et/ou une protection contre la foudre constituée par ou plusieurs diodes Zener 52 bidirectionnelles, placées entre le pôle d'alimentation à basse tension et la masse.

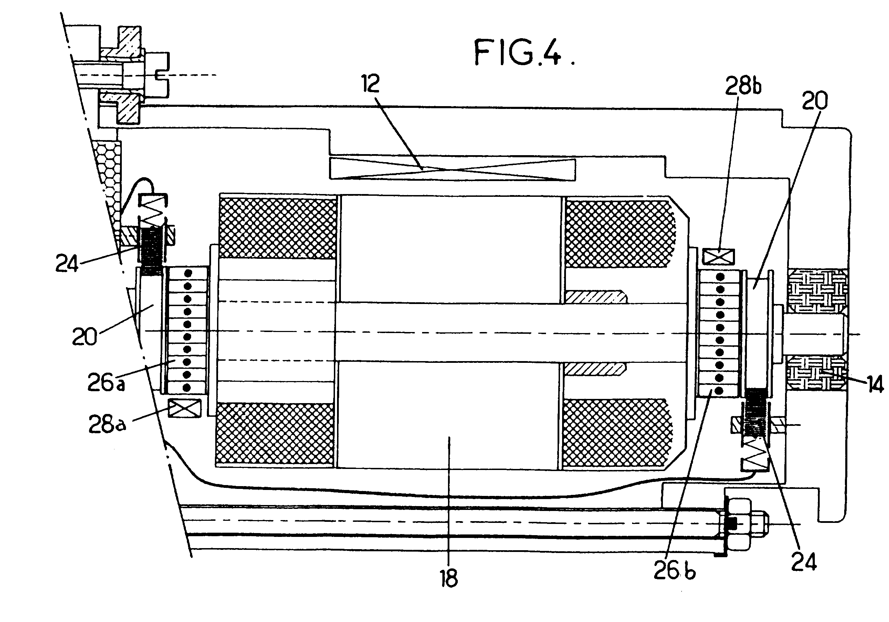

L'invention est susceptible de nombreuses variantes de réalisation. La figure 4 montre, à titre d'exemple de variante, un rotor dont le collecteur électronique est constitué de deux ensembles 26a et 26b placés chacun à une extrémité du rotor et associés chacun à un indicateur 28a ou 28b. L'ensemble 26a comporte alors, dans le cas de dix bobines, les éléments de commutation T₁ à T₁₀ tandis que l'ensemble 26b contient les éléments de commutation T₁₁ à T₂₀.

## Revendications

1. Moteur électrique à courant continu comportant un stator portant des aimants de création d'un champ électrique inducteur ; et un rotor ayant 2n bobines disposées en série (n étant au moins égal à 2), deux bagues lisses (20) d'alimentation en tension continue à partir de balais (24) portés par le stator et deux éléments statiques de commutation pour chaque bobine, lesdits éléments étant reliés chacun à une extrémité de la bobine et à une des bagues (20), le rotor ayant, pour chaque bobine, au moins un capteur sans contact (42) coopérant avec au moins un indicateur (28) porté par le stator, donnant la position angulaire du stator et commandant lesdits éléments statiques de façon à alimenter simultanément n bobines en série sous une polarité et les n bobines restantes sous la polarité opposée pour une plage angulaire du rotor fixée par un circuit à seuils (46).

2. Moteur électrique selon la revendication 1, caractérisé en ce que les éléments statiques sont des transistors (32,34 ; 36,38), associés à des composants passifs d'atténuation des transitoires de commutation.

3. Moteur électrique selon la revendication 1, caractérisé en ce que chacun des éléments statiques comprend un transistor bipolaire (32,36) d'attaque d'un transistor MOS de puissance (34,38), les transistors bipolaires des deux éléments statiques reliés à l'entrée et à la sortie d'une même bobine étant commandés par le même capteur.

4. Moteur électrique selon la revendication 3, caractérisé en ce que ledit capteur (42) attaque les deux transistors bipolaires associés par l'intermédiaire du circuit à seuils (46).

5. Moteur électrique selon l'une quelconque des revendications 1 à 4, caractérisé en ce que tous les éléments de commutation reliés à une même bague sont regroupés dans un circuit hybride.

6. Moteur électrique selon l'une quelconque des revendications 1 à 5, caractérisé en ce que chaque capteur (42) est une sonde de Hall, une sonde magnéto-résistive, ou un capteur photo-électrique associé à une photo-diode placée sur le stator.

7. Moteur électrique selon l'une quelconque des revendications 1 à 6, caractérisé en ce que chaque élément statique de commutation comporte un capteur et en ce que le stator du moteur porte deux indicateurs de position (28) chacun placé de façon à commander successivement tous les éléments statiques de commutation associés à une même extrémité de toutes les bobines.

## Patentansprüche

1. Gleichstromelektromotor mit einem Stator, der Magnete zur Erzeugung eines induktiven elektrischen Feldes umfaßt; und einen Rotor mit 2n in Serie angeordneten Spulen (wobei n zumindest gleich 2 ist), zwei geglättete Ringe (20) zur Gleichstromversorgung mit Hilfe von Bürsten (24), die vom Stator getragen werden und zwei statische Kommutatorelemente für jede Spule, wobei diese Elemente jeweils mit einem Ende der Spule verbunden sind sowie mit einem der Ringe (20), wobei der Rotor für jede Spule zumindest einen Meßwertgeber ohne Kontakt (42) aufweist, der mit zumindest einem Indikator (28) zusammenwirkt, der vom Stator getragen wird, der die Winkelstellung des Stators angibt und die statischen Elemente in einer Weise steuert, um über einen Winkelbereich des fixen Rotors gleichzeitig n Spulen in Serie mit einer Polarität zu versorgen sowie die verbleibenden n Spulen mit der entgegengesetzten Polarität durch einen Schwellschaltkreis.

2. Elektromotor nach Anspruch 1, **dadurch gekennzeichnet, daß** die statischen Elemente Transistoren sind (32, 34; 36, 38), die mit passiven Bestandteilen zur Dämpfung der Kommutationsübergänge verbunden sind.

3. Elektromotor nach Anspruch 1, **dadurch gekennzeichnet, daß** jedes der statischen Elemente einen bipolaren Transistor (32, 36) zum Antrieb eines MOS Leistungstransistors (34, 38) umfaßt, wobei die bipolaren Transistoren der zwei statischen Elemente, die mit dem Eingang und dem Ausgang derselben Spule verbunden sind, durch denselben Meßwertgeber gesteuert werden.

4. Elektromotor nach Anspruch 3, **dadurch gekennzeichnet, daß** der Meßwertgeber (42) die zwei bipolaren Transistoren angreift, die mittels des Schwellschaltkreises (46) verbunden sind.

5. Elektromotor nach einem der Ansprüche 1-4, **dadurch gekennzeichnet**, **daß** alle Kommutatorelemente, die mit demselben Ring verbunden sind, in einem Hybridschaltkreis gruppiert sind.

6. Elektromotor nach einem der Ansprüche 1-5, **dadurch gekennzeichnet**, **daß** jeder Meßwertgeber (42) eine Hall-Sonde ist, eine Magnetwiderstand-Sonde oder ein photoelektrischer Meßwertgeber, der mit einer am Stator angeordneten Photodiode zusammenwirkt.

7. Elektromotor nach einem der Ansprüche 1-6, **dadurch gekennzeichnet**, **daß** jedes statische Kommutatorelement einen Meßwertgeber umfaßt, und dadurch, daß der Stator des Motors zwei Positionsanzeigen (28) trägt, die jeweils so angeordnet sind, daß sie nacheinander alle statischen Kommutatorelemente steuert, die mit derselben Extremität aller Spulen verbunden sind.

## Claims

1. A DC motor comprising a stator carrying magnets for producing an inductive electric field; and a rotor having 2n windings disposed in series (n being at least 2), two smooth rings (20) for a DC supply from brushes (24) carried by the stator and two static commutating elements for each winding, the said elements being each connected to one end of the winding and to one of the rings (20), the rotor having for each winding at least one contactless sensor (42) co-operating with at least one indicator (28) carried by the stator, giving the angular position of the stator and controlling the said static elements so as simultaneously to supply n windings in series under one polarity and the n remaining windings under the opposite polarity for an angular range of the rotor fixed by a threshold circuit (46).

2. An electric motor according to claim 1,
characterised in that the static elements are transistors (32, 34; 36, 38) associated with commutation transient attenuation passive components.

3. An electric motor according to claim 1,
characterised in that each of the static elements comprises a bipolar transistor (32, 36) driving an MOS power transistor (34, 38), the bipolar transistors of the two static elements connected to the input and to the output of the same winding being controlled by the same sensor.

4. An electric motor according to claim 3,
characterised in that the said sensor (42) drives the two associated bipolar transistors through the threshold circuit (46).

5. An electric motor according to any one of claims 1 to 4, characterised in that all the commutating elements connected to the same ring are combined in a hybrid circuit.

6. An electric motor according to any one of claims 1 to 5, characterised in that each sensor (42) is a Hall probe, a magneto-resistive probe, or a photoelectric sensor associated with a photodiode placed on the stator.

7. An electric motor according to any one of claims 1 to 6, characterised in that each static commutating element comprises a sensor and in that the motor stator carries two position indicators (28) each disposed so as successively to control all the static commutating elements associated with the same end of all the windings.
